# EUROPEAN PATENT SPECIFICATION

(11) **EP 3 257 756 B1**
(45) Date of publication and mention of the grant of the patent: **26.10.2022**
(21) Application number: 16748733.9
(22) Date of filing: 06.02.2016
(51) Int. Cl.: B64G 1/58, B64D 13/00, B64C 21/04, F15D 1/00, F42B 15/34, B64C 1/38, B64G 1/50, F42B 10/38, F42B 10/40, F42B 10/46

(54) **THERMAL PROTECTION AND DRAG REDUCTION METHOD AND SYSTEM FOR ULTRA HIGH-SPEED AIRCRAFT**
VERFAHREN UND SYSTEM FÜR WÄRMESCHUTZ UND WIDERSTANDSVERRINGERUNG FÜR HOCHGESCHWINDIGKEITSFLUGZEUG
PROCÉDÉ ET SYSTÈME DE PROTECTION THERMIQUE ET DE RÉDUCTION DE TRAÎNÉE POUR AÉRONEF ULTRA-RAPIDE

(30) Priority: 13.02.2015 CN 201510079182
(43) Date of publication of application: 20.12.2017
(73) Proprietor: Ningbo Institute of Materials Technology and Engineering, Chinese Academy of Sciences, Ningbo, Zhejiang 315201 (CN); Beijing Institute of Spacecraft Environment Engineering, Beijing 100094 (CN)
(72) Inventor: ZHANG, Wenwu, Ningbo Zhejiang 315201 (CN); XIANG, Shuhong, Beijing 100094 (CN); GUO, Chunhai, Ningbo Zhejiang 315201 (CN); TONG, Jingyu, Beijing 100094 (CN); ZHANG, Tianrun, Ningbo Zhejiang 315201 (CN); YANG, Yang, Ningbo Zhejiang 315201 (CN); SONG, Tao, Ningbo Zhejiang 315201 (CN)
(74) Representative: Uexküll & Stolberg
(86) International application number: PCT/CN2016/073710
(87) International publication number: WO 2016/127932

(56) References cited:
- WO-A1-2011/095360
- CN-A- 102 145 745
- CN-A- 102 152 849
- CN-A- 104 608 942
- CN-U- 204 623 858
- CN-Y- 2 744 599
- CN-Y- 2 744 599
- US-A- 2 908 455
- US-A- 3 138 009
- US-A- 3 785 591
- US-A- 4 991 797
- US-A- 4 991 797
- US-A- 5 299 762
- US-A- 5 330 124
- US-A- 5 452 866
- US-A1- 2004 245 389

## Description

### Technical Field

The present invention relates to the technical field of ultra high-speed aircraft, and more particularly, to a thermal protection and drag reduction method and system for ultra high-speed aircraft.

### Background

Ultra high-speed aircrafts refers to aircrafts with flight speed of 5 Mach or more, including rockets, missiles, spacecrafts, space shuttles, aerospace planes and the like. Ultra high-speed aircrafts have two main problems during the flight in that: (1) ultra high-speed aircrafts may face a problem of air viscous drag while entering or exiting the atmospheric layer, and a lot of energy is required to overcome the aerodynamic drag; (2) Ultra high-speed aircrafts may face violent heat generation phenomenon by friction due to aerodynamic shock wave during the flight, thermal barrier occurs, and in serious cases, plasma with high temperature of thousands of degrees may be generated, leading to communication interruption, and thus this stage is the high risk period of the aircraft.

As for air viscous drag, the current ultra high-speed aircrafts can generally reduce air drag through a design of a streamlined profile.

As for the thermal protection of ultra high-speed aircrafts, the current domestic and foreign researches are divided into six types of thermal protection, i.e., heat sink thermal protection, radiation thermal protection, ablation thermal protection, transpiration cooling thermal protection, surface thermal insulation thermal protection, and heat pipe heat dissipation. Among them, the ablation thermal protection and transpiration cooling thermal protection have relatively better effect and are suitable for aircrafts suffering from serious thermal phenomenon (such as plasma generated by the generation of heat by friction). However, both of these methods are difficult to carry out long-term thermal protection, resulting in that expensive aircrafts are required to be overhauled frequently or obsoleted after several times of use. Secondly, it is difficult to control the internal temperature of the aircrafts by using such two methods, but the continuous increase in the internal temperature of the aircrafts will seriously endanger the safety of the carried system. In addition, the relevant protective system has a complicated structure, and accidental failure is easy to occur.

Therefore, drag reduction technology for effectively reducing air viscous drag and thermal protection technology for effectively retarding and overcoming thermal barrier as well as avoiding excessive heat erosion are the issues to be studied in urgent need for ultra high-speed aircrafts.

For example, US 4991797 A provides a system for selective reduction of infrared signature of a vehicle subjected to aerodynamic heating. Liquid coolant under pressure vaporizes in porous sections of the skin of the vehicle to transpiration-cool the skin. Adjacent downstream solid skin sections are film-cooled by the vapor introduced in the boundary layer. Coolant flow control is achieved by pressurizing the liquid coolant, by modulating flow control valves. In addition, CN 2744599 Y discloses a pneumatic heating surface protection device for a super high speed aircraft, wherein a microporous medium is provided on the heated surface portion, and the microporous medium forms a cavity with the inner layer of the aircraft; a compressed air chamber is provided inside the aircraft, the compressed air chamber is communicated with the cavity through the intake passage, and a valve is provided on the intake passage to adjust the opening degree of the valve to control the flow amount of gas into the chamber; the compressed gas is supplied from the gas compressor to the compressed chamber to maintain the gas pressure within the compressed gas chamber.

### SUMMARY

The technical solution adopted by the invention is a thermal protection and drag reduction method for high-speed aircraft, especially a thermal protection and drag reduction method for ultra high-speed aircraft as defined in claim 1. The application of this method can avoid excessive heat erosion of the ultra high-speed aircraft, while reducing air viscous drag of the ultra high-speed aircraft. Further, the invention relates to an ultra high-speed aircraft as defined in claim 6. Preferred embodiments of the invention are set out in the dependent claims.

Described herein is a thermal protection and drag reduction method for ultra high-speed aircraft, wherein a cold source is provided inside a cavity of the ultra high-speed aircraft, a plurality of micropores are arranged on a wall surface of the cavity of the ultra high-speed aircraft, and the cold source is ejected from the micropores in the form of high pressure gas under the action of driving force, so as to form a gas film on the outer surface of the cavity.

The position of the micropores is not limited, and preferably, the micropores are located at the nose cone (or head) and/or empennage portion and the like of the cavity of the ultra high-speed aircraft.

The distribution of micropores on the wall surface of the cavity of the ultra high-speed aircraft are not limited, and preferably, the micropores are regularly distributed on the wall surface of the cavity of the ultra high-speed aircraft. It is further preferred that the micropores are regularly distributed on the wall surface of the cavity of the ultra high-speed aircraft in accordance with aerodynamic characteristics.

The shape of the micropores are shaped holes, and the cross section thereof may be regular shapes (e.g., circular or the like) or irregular shapes (e.g., butterfly-shaped, dustpan-shaped or the like). The numerical simulation shows that when the micropores are shaped holes, it is advantageous to eject the cold source to cover the surface of the cavity so as to form the gas film, and excellent cooling effect may be achieved by less micropores, thereby improving the cooling effect of the gas film while better ensuring structural strength.

The diameters of the micropores is not limited, and preferably, the design of diameters of the micropores takes into account the structural strength of the cavity of the ultra high-speed aircraft and the coverage extent of the cold source to the wall surface of the cavity. As one embodiment, the micropores are circular straight holes with diameters of 0.05 mm to 2.0 mm.

The source of the cold source is liquid nitrogen or dry ice.

The driving force is not limited, including pressure, elastic force, electric power, and the like.

The flight speed of the ultra high-speed aircraft is 5 Mach or more. The ultra high-speed aircraft comprises a rocket, a missile, a spacecraft, a space shuttle, an aerospace plane and the like.

The material of the cavity of the ultra high-speed aircraft is not limited, including high temperature corrosion-resistant C-C composites, C-SiC composites, and the like.

In summary, the method of the present invention is applicable to a high speed aircraft, particularly to an ultra high-speed aircraft. By application of the present invention, a low-temperature gas film may be formed on the surface of the cavity of the ultra high-speed aircraft, and the present invention has the following advantageous effects.
(1) The low-temperature gas film is located on the surface of the cavity of the ultra high-speed aircraft, and the external gas interacts with the gas film, thereby effectively avoiding the generation of a lot of heat due to the direct friction between the external gas and the ultra high-speed aircraft. Meanwhile, the external gas is firstly subjected to friction with the gas film layer, which effectively reduces the gas viscous drag between the ultra high-speed aircraft and the external gas, and the reduction of the gas viscous drag is conducive to reduce the surface temperature of ultra high-speed aircraft.
(2) The low-temperature gas film is formed by the ejection of the cold source from the inside of the cavity of the ultra high-speed aircraft, and in this process, the cold source takes away a lot of heat inside the cavity of the ultra high-speed aircraft, and thus, such method can effectively control the internal temperature of the ultra high-speed aircraft, and can effectively avoid the damage due to continuously rising internal temperature of the aircraft.

Therefore, the application of the method according to the present invention can not only perform thermal protection on the ultra high-speed aircraft, but also effectively reduce viscous drag between the high-speed aircraft and the external gas, thereby improving the energy efficiency and ultimate speed of the ultra high-speed aircraft. The method can retard or avoid the thermal barrier phenomenon, reduce ablation of the thermal protective layer material, improve the safety of the ultra high-speed aircraft and prolong the service life, and thus, it has a good application prospects.

The invention also provides a drag reduction and thermal protection system for high-speed aircraft, especially a drag reduction and thermal protection system for ultra high-speed aircraft comprising a cold source disposed inside a sealed cavity of the ultra high-speed aircraft, and a cold source driving device for converting the cold source into high pressure gas and ejecting the cold source .

At least part of a wall surface of a cavity wall of the ultra high-speed aircraft has a sandwich structure, wherein the sandwich structure comprises a transition layer through which cold source gas passes and an outer surface layer located at a surface of the transition layer, and the outer surface layer is provided with a plurality of micropores for communicating the transition layer with the outside of the cavity.

The cold source driving device comprises a cold source reservoir, an air pump and a buffer; the air pump is in communication with the cold source reservoir; the buffer comprises a buffer inlet and a buffer outlet, the buffer inlet is in communication with the cold source reservoir, the buffer outlet is in communication with the transition layer of the wall surface of the cavity, and a sealing valve is provided at a portion where the buffer outlet is in communication with the transition layer.

During the operation, the air pump supplies a compressed air to the cold source reservoir, the cold source enters the buffer and is vaporized under air pressure, and the gas is ejected into the transition layer of the wall surface of the cavity from the buffer outlet when the sealing valve is open, and then ejected out of the cavity from the micropores of the outer surface layer so as to form a gas film.

The transition layer serves to direct the cold source gas to the outer surface layer, and may be a hollow layer, or other dielectric layer through which the cold source gas may pass.

In order to improve the ejection effect of the cold source, as a preferred embodiment, the number of the buffer outlet is two or more, and each outlet is in communication with the transition layer of the wall surface of the cavity, and sealing valves are provided at the communicating portion.

In order to improve the ejection effect of the cold source, as another preferred embodiment, the cold source driving device further comprises a splitter comprising at least one inlet and two or more outlets, the inlet of the splitter is in communication with the buffer outlet, each outlet of the splitter is in communication with the transition layer of the wall surface of the cavity, and a sealing valve is provided at the portion where each outlet of the splitter is in communication with the transition layer; the cold source enters the splitter through the inlet of the splitter after vaporized, and is ejected into the transition layer of the wall surface of the cavity from each outlet of the splitter after being split into gases in multi-channels, and finally, ejected out of the cavity from the micropores of the outer surface layer so as to form the gas film.

Preferably, an electric valve and a check valve are provided between the air pump and the cold source reservoir. During operation, the compressed air enters the cold source reservoir when the electric valve and the check valve are open, and the air flow can be controlled by adjusting the electric valve.

Preferably, a check valve is provided between the cold source reservoir and the buffer, and during operation, the cold source enters the buffer when the electric valve is open.

Preferably, the cold source driving device further comprises a temperature sensor for monitoring the temperature of the cold source in the buffer.

In order to adjust the rate of cold source entered from the cold source reservoir into the buffer, a pressure sensor for detecting the gas pressure in the cold source reservoir and a safety valve for adjusting the gas pressure in the cold source reservoir are provided on the cold source reservoir.

Preferably, the wall surface of the cavity having the sandwich structure locates the nose cone portion and/or the empennage portion and the like of the cavity.

Preferably, the micropores are regularly distributed on the wall surface of the cavity of the ultra high-speed aircraft.

Preferably, the micropores are non-circular pores; further preferably, the diameters of the micropores range from 0.05 mm to 2.0 mm.

The flight speed of the ultra high-speed aircraft is 5 Mach or more. The ultra high-speed aircraft comprises a rocket, a missile, a spacecraft, a space shuttle, an aerospace plane and the like.

The material of the cavity of the ultra high-speed aircraft is not limited, including high temperature corrosion-resistant C-C composites, C-SiC composites and the like.

The method according to the present invention can form a low-temperature gas film on the surface of the cavity of the ultra high-speed aircraft, which can not only perform thermal protection on the ultra high-speed aircraft, but also effectively reduce the viscous drag between the high-speed aircraft and the external gas, thereby improving the energy efficiency and ultimate speed of the ultra high-speed aircraft. The method can retard or avoid the thermal barrier phenomenon, reduce ablation of the thermal protective layer material, improve the safety of the ultra high-speed aircraft and prolong the service life, and thus, it has a good application prospects.

### BRIEF DESCRIPTION OF THE DRAWINGS

Fig.1 is a schematic structural view of a thermal protection and drag reduction system for ultra high-speed aircraft according to embodiment 1 of the present invention;
Fig.2 is a schematic view of the three-dimensional structure of the wall surface at the head portion of the cavity in Fig.1;
Fig.3 is a schematic top-view of the structure in Fig.2;
Fig.4 is a schematic structural view of the section taken along A-A in Fig.3; and
Fig. 5 is an enlarged view of the portion B in Fig.4.

### DETAILED DESCRIPTION OF THE PREFERRED EMBODIMENTS

The present invention is described in connection with the accompanying drawings and embodiments, it should be noted that the following embodiment is intended to be convenient for understanding the present invention, but does not limit the present invention.

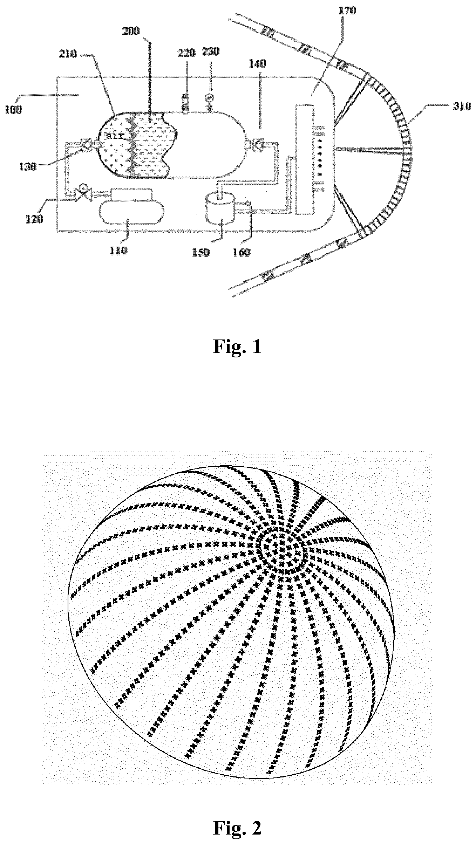

Reference numerals in Figs.1-3: cold source driving device 100, cold source 200, micropores 300, cold source reservoir 210, air pump 110, electric valve 120, check valve 130, check valve 140, buffer 150, temperature sensor 160, dispenser 170, safety valve 220, pressure sensor 230, wall surface 310 of the head of the cavity, transition layer 320, outer surface layer 330.

### Embodiment 1:

In order to make the technical solution of the present invention clearer, the thermal protection and drag reduction system for ultra high-speed aircraft of the present invention will be described in more detail with reference to the accompanying drawings. It will be understood that the specific embodiments described are only used for explaining the present invention, but not for limiting the present invention.

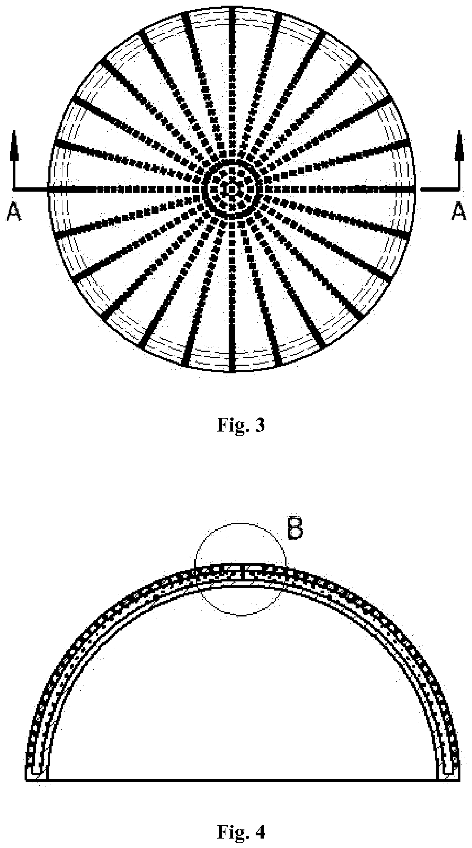

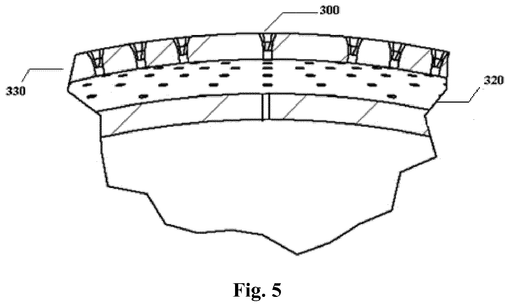

In the present embodiment, as shown in Fig. 1, the ultra high-speed aircraft comprises a sealed cavity, the thermal protection and drag reduction system for ultra high-speed aircraft comprises a cold source 200 disposed inside the sealed cavity of the ultra high-speed aircraft, and a cold source driving device 100 for converting the cold source 200 into a high pressure gas and emitting the high pressure gas. The wall surface 310 of the head portion of the sealed cavity of the ultra high-speed aircraft has a sandwich structure. Fig.2 is a schematic view of the three-dimensional structure of the wall surface at the head portion of the cavity; Fig.3 is a schematic top-view of the structure in Fig.2; Fig.4 is a schematic structural view of the section taken along A-A in Fig.3; and Fig. 5 is an enlarged view of the portion B in Fig.4. As can be seen from Fig.2 to Fig.5, the sandwich structure comprises a transition layer 320 and an outer surface layer 330 on the surface of the transition layer 320 when observed in the direction from the inside of the cavity to the outside of the cavity, and the surface layer 330 is provided with a plurality of micropores 300 for communicating the transition layer 320 with the outside of the cavity. The micropores 300 are distributed on the wall surface 310 of the head portion of the sealed cavity of the ultra high-speed aircraft in a divergent form, each of the micropores is dustpan-shaped, and the angle between the normal of each of the micropores and the normal of the wall surface 310 of the head portion of the cavity is in the range of 0-90 degree.

The cold source driving device 100 comprises a cold source reservoir 210, an air pump 110, a buffer 150, and a splitter 170. The air pump 110 is in communication with the cold source reservoir 210. The buffer 150 comprises a buffer inlet and a buffer outlet. The splitter 170 comprises at least one inlet and two or more outlets. The buffer inlet is in communication with the cold source reservoir 210, the buffer outlet is in communication with the inlet of the splitter, and each outlet of the splitter is in communication with the transition layer 320 of the wall surface of the cavity (as indicated, Fig.1 shows that the transition layer 320 of the wall surface of the cavity is communicated with the three outlets of the splitter), and a sealing valve (not shown in Fig.1) is provided at the portion where each outlet of the splitter is in communication with the transition layer 320 of the wall surface of the cavity).

An electric valve 120 and a check valve 130 are provided between the air pump 110 and the cold source reservoir 210, and the check valve 130 is used for air to enter the cold source reservoir 210.

A check valve 140 is provided between the cold source reservoir 210 and the buffer 150, and the check valve 140 is used for the cold source 200 to enter the buffer 150.

The cold source reservoir 210 is provided with a pressure sensor 230 and a safety valve 220.

In the present embodiment, the cold source 200 is liquid nitrogen.

During operation, the compressed air enters the cold source reservoir 210 when the electric valve 120 and the check valve 130 are open and the air pump 110 is actuated, and the air flow can be controlled by adjusting the electric valve 120. The liquid nitrogen enters the buffer 150 under the air pressure when the check valve 140 is opened, and enters the splitter through the inlet of the splitter 170 under the pressure after vaporized into nitrogen gas at the buffer 150, and then the nitrogen gas is split into gases in multi-channels. The nitrogen gas is ejected into the transition layer 320 of the wall surface of the head of the cavity from each outlet of the splitter 170 when the sealing valves are open, and ejected out of the cavity from the micropores 300 in the outer surface layer 330 after passing through the transition layer 320 so as to form the gas film.

The pressure sensor 230 detects the gas pressure in the cold source reservoir 210, and the safety valve 220 may be adjusted in real time by observing the pressure sensor 230 so as to adjust the gas pressure in the cold source reservoir 210, so that the rate control of the liquid nitrogen discharged from the cold source reservoir 210 to the buffer 150 can be realized.

The buffer 150 is connected to the temperature sensor 160, and the temperature of the nitrogen gas in the buffer 150 is monitored by the temperature sensor 160.

The technical solutions of the present invention are specifically explained through the above embodiments, and it will be understood that the above mentioned are only specific embodiments of the present embodiment, but not for limiting the present invention, and any modifications, supplements and the like within the principle of the present invention should be incorporated into the scope of protection of the present invention as defined by the appended claims.

## Claims

1. A thermal protection and drag reduction method for ultra high-speed aircraft, comprising:
providing a cold source (200) and a cold source driving device (100) comprising a cold source reservoir (210), an air pump (110) and a buffer (150) inside a cavity of the ultra high-speed aircraft,
arranging a transition layer (320) through which cold source gas passes and an outer surface layer (330) located at a surface of the transition layer (320) and provided with a plurality of micropores (300) on a wall surface of the cavity of the ultra high-speed aircraft, wherein the cold source (200) enters the buffer (150) and is vaporized under air pressure, and the gas is ejected into the transition layer (320) from an outlet of the buffer (150), and then ejected out of the cavity from the micropores (300) satisfying the requirement of aerodynamic drag reduction of the outer surface layer (330) so as to form a gas film, wherein the transition layer (320) is a dielectric layer through which the cold source gas passes, and the micropores are shaped holes,
and the cold source (200) is liquid nitrogen or dry ice, and the method simultaneously achieves thermal protection and drag reduction.

2. The thermal protection and drag reduction method for ultra high-speed aircraft according to claim 1, wherein the micropores are provided at a nose cone portion and/or an empennage portion of the cavity of the ultra high-speed aircraft.

3. The thermal protection and drag reduction method for ultra high-speed aircraft according to claim 1, wherein the micropores are regularly distributed on the wall surface of the cavity of the ultra high-speed aircraft, and the shape and the distribution of the micropores satisfy the
requirement of aerodynamic drag reduction.

4. The thermal protection and drag reduction method for ultra high-speed aircraft according to any one of claims 1 to 3, wherein the flight speed of the ultra high-speed aircraft is 5 Mach or more.

5. The thermal protection and drag reduction method for ultra high-speed aircraft according to any one of claims 1 to 3, wherein the ultra high-speed aircraft is a rocket, a missile, a spacecraft, a space shuttle, or an aerospace plane.

6. An ultra high-speed aircraft comprising a thermal protection and drag reduction system, comprising a cold source (200) disposed inside a sealed cavity of the ultra high-speed aircraft, and a cold source driving device (100) for converting the cold source (200) into high pressure gas and emitting the high pressure gas;
wherein, at least part of a wall surface of a cavity wall of the ultra high-speed aircraft has a sandwich structure comprising a transition layer (320) through which cold source gas passes and
an outer surface layer (330) located at a surface of the transition layer (320), the outer surface layer (330) is provided with a plurality of micropores (300) satisfying the requirement of aerodynamic drag reduction for communicating the transition layer (320) with the outside of the cavity;
the cold source driving device (100) comprises a cold source reservoir (210), an air pump (110) and a buffer (150); the air pump (110) is in communication with the cold source reservoir (210); the buffer (150) comprises a buffer inlet and a buffer outlet, the buffer inlet is in communication with the cold source reservoir (210), the buffer outlet is in communication with the transition layer (320) of the wall surface of the cavity, and a sealing valve is provided at a portion where the buffer outlet is in communication with the transition layer (320); and
during operation, the air pump (110) supplies compressed air to the cold source reservoir (210), the cold source (200) enters the buffer (150) and is vaporized under air pressure, and the gas is ejected into the transition layer (320) from the buffer outlet when the sealing valve is open,
and then ejected out of the cavity from the micropores (300) of the outer surface layer (330) so as to form a gas film,
wherein the transition layer (320) is a dielectric layer through which the cold source gas passes, and the micropores are shaped holes,
wherein the cold source (200) is liquid nitrogen or dry ice, and the system simultaneously achieves thermal protection and drag reduction.

7. The ultra high-speed aircraft according to claim 6, wherein a number of the buffer outlets is two or more.

8. The ultra high-speed aircraft according to claim 6, wherein the cold source driving device (100) further comprises a splitter (170) comprising at least one inlet and two or more outlets, the inlet of the splitter (170) is in communication with the buffer outlet, each outlet of the splitter (170) is in communication with the transition layer (320) of the wall surface of the cavity, and a sealing valve is provided at the portion where each outlet of the splitter (170) is in communication with the transition layer (320);
and the cold source (200) enters the splitter (170) through the inlet of the splitter (170) after vaporized, and is ejected into the transition layer (320) of the wall surface of the cavity from each outlet of the splitter (170) after being split into gases in multi-channels, and then ejected out of the cavity from the micropores (300) so as to form the gas film.

9. The ultra high-speed aircraft according to claim 6, 7 or 8, wherein an electric valve (120) and a check valve (130) are provided between the air pump (110) and the cold source reservoir (210), and during operation, the air enters the cold source reservoir (210) when the electric valve (120) and the check valve (130) are open, and the gas flow is controlled by adjusting the electric valve (120).

10. The ultra high-speed aircraft according to claim 6, 7 or 8, wherein a check valve (130) is provided between the cold source reservoir (210) and the buffer (150), and during operation, the cold source (200) enters the buffer (150) when the check valve (130) is open.

11. The ultra high-speed aircraft according to claim 6, 7 or 8, wherein the cold source driving device (100) further comprises a temperature sensor (160) for monitoring the temperature of the cold source (200) in the buffer (150).

12. The ultra high-speed aircraft according to claim 6, 7 or 8, wherein a pressure sensor (230) for detecting gas pressure in the cold source reservoir (210) and a safety valve (220) for adjusting the gas pressure in the cold source reservoir (210) are provided on the cold source reservoir (210).

13. The ultra high-speed aircraft according to claim 6, 7 or 8, wherein flight speed of the ultra high-speed aircraft is 5 Mach or more.

14. The ultra high-speed aircraft according to claim 6, 7 or 8, wherein the ultra high-speed aircraft is a rocket, a missile, a spacecraft, a spaceshuttle, or an aerospace plane.

15. The ultra high-speed aircraft according to claim 6, 7 or 8, wherein the wall surface of the cavity having the sandwich structure locates a nose cone portion and/or an empennage portion of the cavity.

16. The ultra high-speed aircraft according to claim 6, 7 or 8, wherein the micropores (300) are regularly distributed on the wall surface of the cavity of the ultra high-speed aircraft, and the shape and the distribution of the micropores
satisfy the requirement of aerodynamic drag reduction.

## Patentansprüche

1. Verfahren zum Wärmeschutz und zur Verringerung des Widerstands für ein Ultrahochgeschwindigkeitsflugzeug, umfassend
Bereitstellen einer Kältequelle (200) und einer Kältequellen-Antriebsvorrichtung (100), die ein Kältequellen-Reservoir (210), eine Luftpumpe (110) und einen Puffer (150) innerhalb eines Hohlraums des Hochgeschwindigkeitsflugzeugs umfasst,
Anordnen einer Übergangsschicht (320), durch die Kältequellengas hindurchgeht, und einer äußeren Oberflächenschicht (330), die sich an einer Oberfläche der Übergangsschicht (320) befindet und mit einer Vielzahl von Mikroporen (300) auf einer Wandoberfläche des Hohlraums des Ultrahochgeschwindigkeitsflugzeugs versehen ist, wobei die Kältequelle (200) in den Puffer (150) eintritt und unter Luftdruck verdampft wird, und das Gas von einem Auslass des Puffers (150) in die Übergangsschicht (320) ausgestoßen wird und dann aus dem Hohlraum von den Mikroporen (300), die die Anforderung der Verringerung des aerodynamischen Widerstands der äußeren Oberflächenschicht (330) erfüllen, ausgestoßen wird, um einen Gasfilm zu bilden, wobei die Übergangsschicht (320) eine dielektrische Schicht ist, durch die das Kältequellengas hindurchgeht, und die Mikroporen geformte Löcher sind,
und wobei die Kältequelle (200) flüssiger Stickstoff oder Trockeneis ist, und das Verfahren gleichzeitig Wärmeschutz und Widerstandsverringerung erreicht.

2. Verfahren zum Wärmeschutz und zur Verringerung des Widerstands für ein Ultrahochgeschwindigkeitsflugzeug nach Anspruch 1, wobei die Mikroporen an einem Nasenkonusabschnitt und/oder einem Leitwerkabschnitt des Hohlraums des Ultrahochgeschwindigkeitsflugzeugs vorgesehen sind.

3. Verfahren zum Wärmeschutz und zur Verringerung des Widerstands für ein Ultrahochgeschwindigkeitsflugzeug nach Anspruch 1, wobei die Mikroporen regelmäßig auf der Wandoberfläche des Hohlraums des Ultrahochgeschwindigkeitsflugzeugs verteilt sind und die Form und die Verteilung der Mikroporen die Anforderung der Verringerung des aerodynamischen Widerstands erfüllen.

4. Verfahren zum Wärmeschutz und zur Verringerung des Widerstands für ein Ultrahochgeschwindigkeitsflugzeug nach einem der Ansprüche 1 bis 3, wobei die Fluggeschwindigkeit des Ultrahochgeschwindigkeitsflugzeugs Mach 5 oder mehr beträgt.

5. Verfahren zum Wärmeschutz und zur Verringerung des Widerstands für ein Ultrahochgeschwindigkeitsflugzeug nach einem der Ansprüche 1 bis 3, wobei das Ultrahochgeschwindigkeitsflugzeug ein Flugkörper, eine Rakete, ein Raumfahrzeug, ein Space Shuttle oder ein Raumfahrtflugzeug ist.

6. Ultrahochgeschwindigkeitsflugzeug mit einem Wärmeschutzund Widerstandsverringerungssystem, das eine Kältequelle (200), die innerhalb eines abgedichteten Hohlraums des Ultrahochgeschwindigkeitsflugzeugs angeordnet ist, und eine Kältequellen-Antriebsvorrichtung (100) zum Umwandeln der Kältequelle (200) in Hochdruckgas und zum Ausstoßen des Hochdruckgases umfasst;
wobei zumindest ein Teil einer Wandoberfläche einer Hohlraumwand des Ultrahochgeschwindigkeitsflugzeugs eine Sandwichstruktur aufweist, die eine Übergangsschicht (320), durch die Kältequellengas hindurchgeht, und eine äußere Oberflächenschicht (330), die an einer Oberfläche der Übergangsschicht (320) angeordnet ist, aufweist,
wobei die äußere Oberflächenschicht (330) mit einer Vielzahl von Mikroporen (300), die die Anforderung der Verringerung des Luftwiderstands erfüllen, versehen ist, um die Übergangsschicht (320) mit der Außenseite des Hohlraums zu verbinden; wobei die Kältequellen-Antriebsvorrichtung (100) ein Kältequellen-Reservoir (210), eine Luftpumpe (110) und einen Puffer (150) umfasst; wobei die Luftpumpe (110) mit dem Kältequellen-Reservoir (210) in Verbindung steht; der Puffer (150) einen Puffereinlass und einen Pufferauslass umfasst, der Puffereinlass mit dem Kältequellen-Reservoir (210) in Verbindung steht, der Pufferauslass mit der Übergangsschicht (320) der Wandoberfläche des Hohlraums in Verbindung steht, und ein Dichtungsventil an einem Abschnitt vorgesehen ist, an dem der Pufferauslass mit der Übergangsschicht (320) in Verbindung steht; und
wobei während des Betriebs die Luftpumpe (110) Druckluft an das Kältequellen-Reservoir (210) liefert, die Kältequelle (200) in den Puffer (150) eintritt und unter Luftdruck verdampft wird, und wobei das Gas von dem Pufferauslass in die Übergangsschicht (320) ausgestoßen wird, wenn das Dichtungsventil geöffnet ist und dann aus dem Hohlraum aus den Mikroporen (300) der äußeren Oberflächenschicht (330) ausgestoßen wird, so dass ein Gasfilm gebildet wird,
wobei die Übergangsschicht (320) eine dielektrische Schicht ist, durch die das Kältequellengas strömt, und die Mikroporen geformte Löcher sind,
wobei die Kältequelle (200) flüssiger Stickstoff oder Trockeneis ist und das System gleichzeitig Wärmeschutz und Widerstandsreduzierung erreicht.

7. Ultrahochgeschwindigkeitsflugzeug nach Anspruch 6, wobei die Anzahl der Pufferauslässe zwei oder mehr beträgt.

8. Ultrahochgeschwindigkeitsflugzeug nach Anspruch 6, wobei die Kältequellen-Antriebsvorrichtung (100) ferner einen Verteiler (170) umfasst, der mindestens einen Einlass und zwei oder mehr Auslässe umfasst,
wobei der Einlass des Verteilers (170) in Verbindung mit dem Pufferauslass steht, jeder Auslass des Verteilers (170) mit der Übergangsschicht (320) der Wandfläche des Hohlraums in Verbindung steht, und ein Dichtungsventil an dem Abschnitt vorgesehen ist, an dem jeder Auslass des Verteilers (170) mit der Übergangsschicht (320) in Verbindung steht;
und wobei die Kältequelle (200) durch den Einlass des Verteilers (170) in den Verteiler (170) eintritt, nachdem sie verdampft ist, und von jedem Auslass des Verteilers (170) in die Übergangsschicht (320) der Wandoberfläche des Hohlraums ausgestoßen wird, nachdem sie in mehreren Kanälen in Gase aufgespalten wurde, und dann aus dem Hohlraum von den Mikroporen (300) ausgestoßen wird, um den Gasfilm zu bilden.

9. Ultrahochgeschwindigkeitsflugzeug nach Anspruch 6, 7 oder 8, wobei ein elektrisches Ventil (120) und ein Rückschlagventil (130) zwischen der Luftpumpe (110) und dem Kältequellen-Reservoir (210) vorgesehen sind, und während des Betriebs die Luft in das Kältequellen-Reservoir (210) eintritt, wenn das elektrische Ventil (120) und das Rückschlagventil (130) geöffnet sind, und der Gasfluss durch Einstellen des elektrischen Ventils (120) gesteuert wird.

10. Ultrahochgeschwindigkeitsflugzeug nach Anspruch 6, 7 oder 8, wobei ein Rückschlagventil (130) zwischen dem Kältequellen-Reservoir (210) und dem Puffer (150) vorgesehen ist und die Kältequelle (200) während des Betriebs in den Puffer (150) eintritt, wenn das Rückschlagventil (130) geöffnet ist.

11. Ultrahochgeschwindigkeitsflugzeug nach Anspruch 6, 7 oder 8, wobei die Kältequellen-Antriebsvorrichtung (100) ferner einen Temperatursensor (160) zur Überwachung der Temperatur der Kältequelle (200) in dem Puffer (150) umfasst.

12. Ultrahochgeschwindigkeitsflugzeug nach Anspruch 6, 7 oder 8, wobei ein Drucksensor (230) zum Erfassen des Gasdrucks in dem Kältequellenreservoir (210) und ein Sicherheitsventil (220) zum Einstellen des Gasdrucks in dem Kältequellen-Reservoir (210) an dem Kältequellen-Reservoir (210) vorgesehen sind.

13. Ultrahochgeschwindigkeitsflugzeug nach Anspruch 6, 7 oder 8, wobei die Fluggeschwindigkeit des Ultrahochgeschwindigkeitsflugzeugs Mach 5 oder mehr beträgt.

14. Ultrahochgeschwindigkeitsflugzeug nach Anspruch 6, 7 oder 8, wobei das Ultrahochgeschwindigkeitsflugzeug ein Flugkörper, eine Rakete, ein Raumfahrzeug, ein Space Shuttle oder ein Raumfahrtflugzeug ist.

15. Ultrahochgeschwindigkeitsflugzeug nach Anspruch 6, 7 oder 8, wobei die Wandfläche des Hohlraums mit der Sandwichstruktur einen Nasenkonusabschnitt und/oder einen Leitwerkabschnitt des Hohlraums darstellt.

16. Ultrahochgeschwindigkeitsflugzeug nach Anspruch 6, 7 oder 8, wobei die Mikroporen (300) regelmäßig auf der Wandoberfläche des Hohlraums des Ultrahochgeschwindigkeitsflugzeugs verteilt sind und die Form und die Verteilung der Mikroporen die Anforderung der Reduzierung des Luftwiderstands erfüllen.

## Revendications

1. Procédé de protection thermique et de réduction de la traînée pour aéronef ultra-rapide, comprenant les étapes suivantes :
fournir une source froide (200) et un dispositif de pilotage de source froide (100) comprenant un réservoir de source froide (210), une pompe à air (110) et un dispositif intermédiaire (150) dans une cavité de l'aéronef ultra-rapide,
placer une couche de transition (320) à travers laquelle passe un gaz de source froide et une couche de surface extérieure (330) située sur une surface de la couche de transition (320) et pourvue d'une pluralité de micropores (300) sur une surface de paroi de la cavité de l'aéronef ultra-rapide, dans lequel la source froide (200) entre dans le dispositif intermédiaire (150) et est vaporisée sous une pression d'air, et le gaz est éjecté dans la couche de transition (320) depuis une sortie du dispositif intermédiaire (150), puis est éjecté hors de la cavité par les micropores (300) en satisfaisant le besoin de réduction de la traînée aérodynamique de la couche de surface extérieure (330) afin de former un film gazeux, dans lequel la couche de transition (320) est une couche diélectrique à travers laquelle passe le gaz de source froide, et les micropores sont des trous façonnés,
et la source froide (200) est de l'azote liquide ou de la glace carbonique, et le procédé réalise simultanément une protection thermique et une réduction de la traînée.

2. Procédé de protection thermique et de réduction de la traînée pour aéronef ultra-rapide selon la revendication 1, dans lequel les micropores sont formés dans une partie de coiffe et/ou une partie d'empennage de la cavité de l'aéronef ultra-rapide.

3. Procédé de protection thermique et de réduction de la traînée pour aéronef ultra-rapide selon la revendication 1, dans lequel les micropores sont répartis régulièrement sur la surface de paroi de la cavité de l'aéronef ultra-rapide, et la forme et la répartition des micropores satisfont le besoin de réduction de la traînée aérodynamique.

4. Procédé de protection thermique et de réduction de la traînée pour aéronef ultra-rapide selon l'une quelconque des revendications 1 à 3, dans lequel la vitesse de vol de l'aéronef ultra-rapide est égale à Mach 5 ou plus.

5. Procédé de protection thermique et de réduction de la traînée pour aéronef ultra-rapide selon l'une quelconque des revendications 1 à 3, dans lequel l'aéronef ultra-rapide est une fusée, un missile, un engin spatial, une navette spatiale ou un avion spatial.

6. Aéronef ultra-rapide comprenant un système de protection thermique et de réduction de la traînée, comprenant une source froide (200) placée à l'intérieur d'une cavité hermétique de l'aéronef ultra-rapide, et un dispositif de pilotage de source froide (100) pour convertir la source froide (200) en gaz à haute pression et émettre le gaz à haute pression ;
dans lequel au moins une partie d'une surface de paroi d'une paroi de cavité de l'aéronef ultra-rapide a une structure sandwich comprenant une couche de transition (320) à travers laquelle passe un gaz de source froide et
une couche de surface extérieure (330) située sur une surface de la couche de transition (320), la couche de surface extérieure (330) étant pourvue d'une pluralité de micropores (300) satisfaisant le besoin de réduction de la traînée aérodynamique pour faire communiquer la couche de transition (320) avec l'extérieur de la cavité ;
le dispositif de pilotage de source froide (100) comprend un réservoir de source froide (210), une pompe à air (110) et un dispositif intermédiaire (150) ; la pompe à air (110) est en communication avec le réservoir de source froide (210) ; le dispositif intermédiaire (150) comprend une entrée de dispositif intermédiaire et une sortie de dispositif intermédiaire, l'entrée de dispositif intermédiaire est en communication avec le réservoir de source froide (210), la sortie de dispositif intermédiaire est en communication avec la couche de transition (320) de la surface de paroi de la cavité, et une valve d'étanchéité est placée dans une partie où la sortie de dispositif intermédiaire est en communication avec la couche de transition (320) ; et
en fonctionnement, la pompe à air (110) fournit de l'air comprimé au réservoir de source froide (210), la source froide (200) entre dans le dispositif intermédiaire (150) et est vaporisée sous une pression d'air, et le gaz est éjecté dans la couche de transition (320) depuis la sortie de dispositif intermédiaire quand la valve d'étanchéité est ouverte, puis est éjecté hors de la cavité par les micropores (300) de la couche de surface extérieure (330) afin de former un film gazeux,
dans lequel la couche de transition (320) est une couche diélectrique à travers laquelle passe le gaz de source froide, et les micropores sont des trous façonnés,
dans lequel la source froide (200) est de l'azote liquide ou de la glace carbonique, et le système réalise simultanément une protection thermique et une réduction de la traînée.

7. Aéronef ultra-rapide selon la revendication 6, dans lequel le nombre de sorties de dispositif intermédiaire est égal à deux ou plus.

8. Aéronef ultra-rapide selon la revendication 6, dans lequel le dispositif de pilotage de source froide (100) comprend en outre un diviseur (170) comprenant au moins une entrée et deux sorties ou plus, l'entrée du diviseur (170) est en communication avec la sortie de dispositif intermédiaire, chaque sortie du diviseur (170) est en communication avec la couche de transition (320) de la surface de paroi de la cavité, et une valve d'étanchéité est placée dans une partie où chaque sortie du diviseur (170) est en communication avec la couche de transition (320) ;
et la source froide (200) entre dans le diviseur (170) par l'entrée du diviseur (170) après avoir été vaporisée, puis est éjectée dans la couche de transition (320) de la surface de paroi de la cavité depuis chaque sortie du diviseur (170) après avoir été divisée en gaz en plusieurs canaux, puis est éjectée hors de la cavité par les micropores (300) afin de former le film gazeux.

9. Aéronef ultra-rapide selon la revendication 6, 7 ou 8, dans lequel une électrovanne (120) et un clapet antiretour (130) sont placés entre la pompe à air (110) et le réservoir de source froide (210), et pendant le fonctionnement, l'air entre dans le réservoir de source froide (210) lorsque l'électrovanne (120) et le clapet antiretour (130) sont ouverts, et le débit de gaz est réglé en ajustant l'électrovanne (120).

10. Aéronef ultra-rapide selon la revendication 6, 7 ou 8, dans lequel un clapet antiretour (130) est placé entre le réservoir de source froide (210) et le dispositif intermédiaire (150), et pendant le fonctionnement, la source froide (200) entre dans le dispositif intermédiaire (150) lorsque le clapet antiretour (130) est ouvert.

11. Aéronef ultra-rapide selon la revendication 6, 7 ou 8, dans lequel le dispositif de pilotage de source froide (100) comprend en outre un capteur de température (160) pour surveiller la température de la source froide (200) dans le dispositif intermédiaire (150).

12. Aéronef ultra-rapide selon la revendication 6, 7 ou 8, dans lequel un capteur de pression (230) pour détecter une pression de gaz dans le réservoir de source froide (210) et une valve de sécurité (220) pour ajuster la pression de gaz dans le réservoir de source froide (210) sont placés sur le réservoir de source froide (210).

13. Aéronef ultra-rapide selon la revendication 6, 7 ou 8, dans lequel la vitesse de vol de l'aéronef ultra-rapide est égale à Mach 5 ou plus.

14. Aéronef ultra-rapide selon la revendication 6, 7 ou 8, dans lequel l'aéronef ultra-rapide est une fusée, un missile, un engin spatial, une navette spatiale ou un avion spatial.

15. Aéronef ultra-rapide selon la revendication 6, 7 ou 8, dans lequel la surface de paroi de la cavité ayant la structure sandwich définit une partie de coiffe et/ou une partie d'empennage de la cavité.

16. Aéronef ultra-rapide selon la revendication 6, 7 ou 8, dans lequel les micropores (300) sont répartis régulièrement sur la surface de paroi de la cavité de l'aéronef ultra-rapide, et la forme et la répartition des micropores satisfont le besoin de réduction de la traînée aérodynamique.
